# EUROPÄISCHE PATENTANMELDUNG

(11) **EP 4 714 707 A1**
(43) Veröffentlichungstag der Anmeldung: **25.03.2026**
(21) Anmeldenummer: 25203295.8
(22) Anmeldetag: 19.09.2025
(51) Int. Cl.: B60K 6/46, B60W 10/06, B60W 10/08, B60W 20/12, B60W 20/16, B60W 10/26

(54) **HYBRIDFAHRZEUG**

(30) Priorität: 19.09.2024 DE 102024127035
(71) Anmelder: Deutsche Post AG, 53113 Bonn (DE); Scania CV AB, 151 87 Södertälje (SE)
(72) Erfinder: Meyer, Dr. Tobias, 53604 Bad Honnef (DE); Salomon, Dr. Jörg, 53113 Bonn (DE); Lohmeier, Michael, 53359 Rheinbach (DE); Hanson, Kaj, 14462 Rönninge (SE); Ställberg, Anders, 14638 Tullige (SE); Malm Haglund, Johan, 12629 Hägersten (SE)
(74) Vertreter: dompatent

(57) **Zusammenfassung**

Hybridfahrzeug sowie Verfahren, insbesondere für den Transport von Stückgütern oder Sendungen, mit einem Elektromotor zu Bewegung des Hybridfahrzeugs, einer Batterie, wobei die Batterie verbunden ist mit dem Elektromotor und den Elektromotor mit Strom versorgt. Weiterhin weist das Hybridfahrzeug eine Generatoreinheit auf, wobei die Generatoreinheit einen Verbrennungsmotor und einen mit dem Verbrennungsmotor verbundenen Generator aufweist, wobei der Generator die Bewegungsenergie des Verbrennungsmotors in Strom umwandelt zum Betrieb des Elektromotors oder zur Speicherung in der Batterie. Eine Steuereinheit ist mit der Generatoreinheit verbunden und weiterhin ausgebildet die durch das Hybridfahrzeug zurückgelegte Strecke zu ermitteln. Dabei ist die Steuereinheit weiterhin ausgebildet die Generatoreinheit zu steuern in Abhängigkeit der von dem Hybridfahrzeug zurückgelegten Strecke.

## Beschreibung

Die vorliegende Erfindung betrifft ein Hybridfahrzeug, insbesondere für den Transport von Stückgütern oder Sendungen. Weiterhin betrifft die vorliegende Erfindung ein Verfahren zur Emissionsreduktion eines Hybridfahrzeugs sowie ein Verfahren zum Betrieb einer Flotte von Fahrzeugen, welche ein solches Hybridfahrzeug umfasst.

Bekannte Hybridfahrzeuge weisen einen Elektromotor auf zur Bewegung des Hybridfahrzeugs bzw. der Antriebsräder des Hybridfahrzeugs. Mit dem Elektromotor ist eine Batterie verbunden und versorgt diesen mit Strom zum Betrieb des Elektromotors. Bei bekannten Hybridfahrzeugen ist zusätzlich ein Verbrennungsmotor vorhanden. Hierbei kann die Bewegungsenergie des Verbrennungsmotors unmittelbar herangezogen werden zur Bewegung des Hybridfahrzeugs bzw. zur Bewegung der Antriebsreifen des Hybridfahrzeugs. Alternativ hierzu existieren Hybridfahrzeuge, bei denen der Verbrennungsmotor Teil einer Generatoreinheit ist. Mittels der Generatoreinheit wird die Bewegungsenergie des Verbrennungsmotors durch einen Generator der Generatoreinheit in Strom umgewandelt, welcher sodann genutzt wird, um die Batterie zu laden oder den Elektromotor mit Strom zu versorgen. Eine solche Generatoreinheit wird auch als "range extender" bezeichnet, da durch die Generatoreinheit die Reichweite des Hybridfahrzeugs erhöht wird. Diese Ausgestaltung eines Hybridfahrzeugs wird auch als serielles Hybridfahrzeug bezeichnet. Es existiert gerade keine unmittelbare/mechanische Verbindung zwischen der Generatoreinheit und den Antriebsrädern des Hybridfahrzeugs.

Zur Reduktion der Emissionen eines Hybridfahrzeugs ist es erforderlich, dass das Hybridfahrzeug so häufig wie möglich ausschließlich den Elektromotor verwendet, gespeist mit dem Strom der Batterie, ohne dass der Verbrennungsmotor der Generatoreinheit aktiviert ist. Hierbei hat sich jedoch gezeigt, dass die Generatoreinheit üblicherweise verwendet wird im Sinne eines konventionellen Verbrennerautos und dass die Batterie des Hybridfahrzeugs überwiegend nur mittels der Generatoreinheit geladen wird. Ein Betrieb des Hybridfahrzeugs im Sinne eines Elektrofahrzeugs findet hierbei nicht oder nur im geringen Umfang statt. Hierdurch steigen jedoch die verursachten Emissionen des Hybridfahrzeugs an und vorgegebene Grenzwerte für Emissionen und insbesondere die Emission von CO₂ durch das Hybridfahrzeug können nicht mehr eingehalten werden. Dies läuft der Bestrebung der Emissionsreduzierung durch die Verwendung eines Hybridfahrzeugs zuwider, sodass sich das erhöhte Gewicht eines Hybridfahrzeugs durch Vorsehen der Batterie und des Elektromotors sowie des Generators der Generatoreinheit zusätzlich negativ auswirken auf die Emissionen des Hybridfahrzeugs. Die Vorteile der Verwendung eines Hybridfahrzeugs kehren sich somit in Nachteile um.

Aufgabe der vorliegenden Erfindung ist es ein Hybridfahrzeug zu schaffen mit einer reduzierten Emission.

Die Aufgabe wird gelöst durch ein Hybridfahrzeug gemäß Anspruch 1, ein Verfahren gemäß Anspruch 8 sowie ein Verfahren zum Betrieb einer Flotte von Fahrzeugen gemäß Anspruch 11.

Das erfindungsgemäße Hybridfahrzeug, insbesondere für den Transport von Stückgütern oder Sendungen, weist einen Elektromotor auf zur Bewegung des Hybridfahrzeugs. Hierbei ist der Elektromotor mechanisch verbunden mit den Antriebsrädern des Hybridfahrzeugs, sodass die mechanische Bewegung des Elektromotors unmittelbar zum Antrieb des Hybridfahrzeugs genutzt wird. Weiterhin weist das Hybridfahrzeug eine Batterie auf, wobei die Batterie verbunden ist mit dem Elektromotor und den Elektromotor mit Strom versorgt. Weiterhin weist das Hybridfahrzeug eine Generatoreinheit auf, wobei die Generatoreinheit einen Verbrennungsmotor und einen mit dem Verbrennungsmotor verbundenen Generator aufweist. Der Generator wandelt die Bewegungsenergie des Verbrennungsmotors in Strom um. Der durch die Generatoreinheit erzeugte Strom wird sodann genutzt zum Betrieb des Elektromotors oder er kann in der Batterie gespeichert werden. Insbesondere weist die Generatoreinheit bzw. der Verbrennungsmotor der Generatoreinheit keine mechanische Verbindung zu den Antriebsrädern des Hybridfahrzeugs auf. Somit wird die Bewegungsenergie des Verbrennungsmotors nicht mechanisch genutzt zur Bewegung des Hybridfahrzeugs. Es handelt sich hierbei somit um ein serielles Hybridfahrzeug und die Generatoreinheit arbeitet im Sinne eines "range extenders". Die Batterie des Hybridfahrzeugs kann somit einerseits durch eine Kabelverbindung mit einem Stromnetz geladen werden. Alternativ hierzu kann die Generatoreinheit genutzt werden zum Laden der Batterie bzw. zur Stromversorgung des Elektromotors.

Erfindungsgemäß weist das Hybridfahrzeug eine Steuereinheit auf, wobei die Steuereinheit mit der Generatoreinheit verbunden ist und weiterhin ausgebildet ist, die durch das Hybridfahrzeug zurückgelegte Strecke zu ermitteln. Dabei ist erfindungsgemäß die Steuereinheit weiterhin ausgebildet, die Generatoreinheit zu steuern in Abhängigkeit der von dem Hybridfahrzeug zurückgelegten Strecke. So kann beispielsweis die Generatoreinheit durch die Steuereinheit aktiviert werden, sofern von dem Hybridfahrzeug eine vorgegebene Mindeststrecke rein elektrisch zurückgelegt wurde. Erst dann ist ein Zuschalten der Generatoreinheit überhaupt durch die Steuereinheit ermöglicht. Hierdurch wird verhindert, dass insbesondere Kurzstreckenfahrten mit Unterstützung des Verbrennungsmotors der Generatoreinheit durchgeführt werden. Alternativ oder zusätzlich hierzu kann ein Abschalten der Generatoreinheit durch die Steuereinheit erfolgen bzw. eine Aktivierung der Generatoreinheit verhindert werden, sofern eine vorgegebene Strecke durch das Hybridfahrzeug zurückgelegt wurde. Somit wird durch die Steuereinheit, welche die Generatoreinheit in Abhängigkeit der von dem Hybridfahrzeug zurückgelegten Strecke steuert, die Generatoreinheit bzw. das Hybridfahrzeug derart gesteuert, dass die Emission des Hybridfahrzeugs geringgehalten wird. In anderen Worten wird der Betrieb des Hybridfahrzeugs als rein elektrisches Fahrzeug, welches seine elektrische Energie ausschließlich aus der Batterie erhält, ohne Nutzung der Generatoreinheit als "range extender", maximiert und somit die Emission des Hybridfahrzeugs minimiert.

Vorzugsweise handelt es sich bei dem Hybridfahrzeug um einen LKW. Insbesondere weist das Hybridfahrzeug eine zulässige Gesamtmasse von mehr als 3,5t und bevorzugt mehr als 7,5t auf. Bei schweren Fahrzeugen ist eine Reduzierung der Emission besonders schwierig, wobei mittels der vorliegenden Erfindung auch für diese Fahrzeuge eine geeignete Emissionsreduzierung erreicht werden kann. Hierbei ist insbesondere zu berücksichtigen, dass LKWs sowohl im Langstreckenverkehr eingesetzt werden, bei dem die Aktivierung der Generatoreinheit gerade sinnvoll ist, als auch im Kurzstreckenverkehr, bei dem eine Aktivierung der Generatoreinheit möglichst verhindert werden sollte.

Vorzugsweise handelt es sich bei dem Hybridfahrzeug um ein Wechselbrückenfahrzeug.

Vorzugsweise ist die Steuereinheit ausgebildet, die Generatoreinheit zu steuern in Abhängigkeit von der vom Hybridfahrzeug mit aktivierter Generatoreinheit zurückgelegten Strecke. Somit wird von der Steuereinheit die Strecke erfasst, welche das Hybridfahrzeug mit aktivierter Generatoreinheit zurücklegt, also die Strecke des Hybridfahrzeugs, bei der das Hybridfahrzeug Emissionen erzeugt. Somit kann insbesondere eine Aktivierung der Generatoreinheit durch die Steuereinheit verhindert werden bzw. die Generatoreinheit durch die Steuereinheit abgeschaltet werden, sofern die vom Hybridfahrzeug mit aktivierter Generatoreinheit zurückgelegten Strecke einen vorgegebenen Grenzwert überschreitet. Somit wird ein unbegrenzter Betrieb der Generatoreinheit und somit eine Nutzung des Hybridfahrzeugs als klassisches Verbrennerfahrzeug gerade ausgeschlossen. Sofern die Aktivierung der Generatoreinheit durch die Steuereinheit verhindert wird oder die Generatoreinheit durch die Steuereinheit abgeschaltet wird, wird der Elektromotor des Hybridfahrzeugs ausschließlich aus dem in der Batterie gespeicherten Strom gespeist. Somit ist es erforderlich, bei einer leeren Batterie diese im Sinne eines Elektroautos zu laden durch Verbinden des Hybridfahrzeugs bzw. der Batterie mit einem Stromnetz. Somit werden durch das Hybridfahrzeug gemäß der vorliegenden Erfindung die Vorzüge eines Hybridfahrzeugs durch eine Erhöhung der Reichweite weiterhin erhalten, wohingegen Verwendung des Hybridfahrzeugs im Sinne eines konventionellen Verbrennungsfahrzeugs und den damit erhöhten Emissionen gerade verhindert wird. Emissionsgrenzwerte können somit durch die Steuereinheit effektiv eingehalten werden, da eine Nutzung des Verbrennungsmotors beschränkt ist durch den vorgegebenen Grenzwert.

Hierbei kann der vorgegebene Grenzwert eine vom Hybridfahrzeug zurückgelegte Strecke, eine mit aktivierter Generatoreinheit zurückgelegte Strecke oder ein Verhältnis der zurückgelegten Strecke zu der mit aktivierter Generatoreinheit zurückgelegten Strecke umfassen.

Vorzugsweise erfolgt die Aktivierung der Generatoreinheit in konventioneller Weise in Abhängigkeit des Ladezustands der Batterie. Somit kann bei Unterschreiten eines gewissen Ladeniveaus der Batterie, aufgrund der Entladung der Batterie durch die Versorgung des Elektromotors, die Generatoreinheit zugeschaltet werden. Die Aktivierung der Generatoreinheit in Abhängigkeit des Ladezustands der Batterie kann hierbei in konventioneller Weise erfolgen. Alternativ oder zusätzlich hierzu kann eine Aktivierung der Generatoreinheit erfolgen, sofern mehr Strom für den Elektromotor erforderlich ist, als von der Batterie geliefert werden kann, beispielsweise durch eine Leistungsanforderung an den Elektromotor durch den Benutzer. Jedoch kann gemäß der vorliegenden Erfindung eine solche Aktivierung der Generatoreinheit durch die Steuereinheit gerade verhindert werden wie vorstehend beschrieben, sodass unnötige oder unzulässige Emissionen durch eine Benutzung der Generatoreinheit verhindert werden können.

Vorzugsweise ist die Steuereinheit ausgebildet die Generatoreinheit zu steuern in Abhängigkeit der über die zurückgelegte Strecke erzeugte Emission des Hybridfahrzeugs. Insbesondere ist die Steuereinheit ausgebildet die Emissionen der Generatoreinheit zu ermitteln beispielsweise anhand des Brennstoffverbrauchs und/oder anderer Motorkenngrößen. Diese Motorkenngrößen können dabei beispielsweise die Drehzahl des Verbrennungsmotors der Generatoreinheit umfassen oder dergleichen. Hierbei kann insbesondere eine Aktivierung der Generatoreinheit durch die Steuereinheit verhindert werden, sofern die vom Hybridfahrzeug erzeugte Emission über die zurückgelegte Strecke einen vorgegebenen Grenzwert überschreitet. Somit kann sichergestellt werden, dass die über eine zurückgelegte Strecke erzeugte Emission des Hybridfahrzeugs reduziert wird und ein uneingeschränkter Betrieb der Generatoreinheit und somit eine Nutzung des Hybridfahrzeugs im Sinne eines konventionellen Verbrennerfahrzeugs gerade ausgeschlossen wird. Insbesondere ist es hierbei möglich, vorgegebenen Emissionsgrenzwerte zur berücksichtigen. Insbesondere hängt der vorgegebene Grenzwert beispielsweise vom Gewicht des Hybridfahrzeugs ab. Alternativ oder zusätzlich hierzu kann der vorgegebene Grenzwert die zurückgelegte Strecke des Hybridfahrzeugs berücksichtigen. Somit kann beispielsweise zunächst eine Aktivierung der Generatoreinheit nach einer gewissen Dauer bzw. einer gewissen Emission, welche über dem vorgegebenen Grenzwert liegt, verhindert werden bzw. die Generatoreinheit abgeschaltet werden. Wird sodann die Fahrt des Hybridfahrzeugs fortgesetzt und das Hybridfahrzeug hierbei ausschließlich im Sinne eines Elektrofahrzeugs genutzt, kann nach einer ausreichend langen zurückgelegten Strecke, welche ausschließlich mittels des Stroms der Batterie zurückgelegt wurde, eine Aktivierung der Generatoreinheit durch die Steuereinheit wieder ermöglicht werden, ohne dass die Emission des Hybridfahrzeugs über die zurückgelegte Strecke den vorgegebenen Grenzwert überschreitet. Insbesondere kann der vorgegebene Grenzwert für die Emission kombiniert werden mit der vorstehend beschriebenen Berücksichtigung der vom Hybridfahrzeug mit aktivierter Generatoreinheit zurückgelegten Strecke. Insbesondere kann bei einem seriellen Hybridfahrzeug die Emission ermittelt werden durch die Dauer der Aktivierung der Generatoreinheit, da der Verbrennungsmotor der Generatoreinheit üblicherweise mit einer konstanten Drehzahl in einem optimalen und gleichbleibenden Leistungsbereich betrieben wird.

Vorzugsweise ist die Steuereinheit ausgebildet, die Generatoreinheit in Abhängigkeit der Strecke in einem vorgegebenen Zeitraum zu steuern. Insbesondere ist somit die Steuereinheit ausgebildet, die Generatoreinheit in Abhängigkeit der rein elektrisch zurückgelegten Strecke bzw. der mit aktivierter Generatoreinheit zurückgelegten Strecke in einem vorgegebenen Zeitraum zu steuern. Bevorzugt ist eine Berücksichtigung eines vorgegebenen Grenzwerts für die mit aktivierter Generatoreinheit zurückgelegten Strecke des Hybridfahrzeugs oder einer über die von dem Hybridfahrzeug zurückgelegten Strecke erzeugte Emission für einen vorgegeben Zeitraum berücksichtigt. Insbesondere umfasst dieser vorgegebene Zeitraum einen Tag, eine Woche, einen Monat oder ein Jahr. Handelt es sich bei dem vorgegebenen Zeitraum beispielsweise um ein Jahr, und überschreitet die von dem Hybridfahrzeug mit aktivierter Generatoreinheit zurückgelegte Strecke beispielsweise einen hierfür vorgegebenen Grenzwert, so ist für den verbleibenden Zeitraum, d.h. den Rest des Jahres, eine Aktivierung der Generatoreinheit verhindert durch die Steuereinheit, sofern kein Ausgleich durch eine ausreichende rein elektrisch bzw. emissionsfrei zurückgelegte Strecke erfolgt. Somit ist sodann eine ausschließliche Nutzung des Hybridfahrzeugs im Sinne eines Elektrofahrzeugs möglich. Der Verbrennungsmotor der Generatoreinheit wird nicht mehr gestartet, sofern der Ladezustand der Batterie ein vorgegebenes Ladelevel unterschreitet. Vielmehr ist es dann erforderlich, die Batterie des Hybridfahrzeugs konventionell durch Verbinden des Hybridfahrzeugs mit einem Stromnetz zu laden. Somit ist es insbesondere möglich, eine für den jeweiligen Zeitraum vorgegebene Emissionsgrenze (beispielsweise CO₂ Emission in kg/Jahr) einzuhalten. Insbesondere wird bei Unterschreiten eines vorgegebenen Grenzwerts der zurückgelegten Strecke der Grenzwert des nachfolgenden Zeitraums angepasst und insbesondere erhöht. Verbleibt somit für einen vorgegebenen Zeitraum noch eine gewisse Strecke, die von dem Hybridfahrzeug insbesondere mit aktivierter Generatoreinheit zurückgelegt werden kann, wird der Grenzwert für den nachfolgenden Zeitraum um diese gewisse Strecke erhöht, sodass in dem nachfolgenden Zeitraum die Generatoreinheit für eine längere Strecke genutzt werden kann. Hierdurch findet eine Bilanzierung statt zwischen den einzelnen Zeiträumen, sodass ein emissionssparsames Fahren in einem Zeitraum die Nutzungsmöglichkeiten des Hybridfahrzeugs in einem nachfolgenden Zeitraum erhöht. Hierbei kann es sich um einen unmittelbar nachfolgenden Zeitraum handeln oder es findet eine Akkumulierung über die Zeiträume statt, sodass auch bei einem späteren Zeitraum das Unterschreiten eines vorgegebenen Grenzwerts der zurückgelegten Strecke in einem vorherigen Zeitraum berücksichtigt wird.

In einem weiteren Aspekt der vorliegenden Erfindung wird ein Verfahren zur Emissionsreduktion eines Hybridfahrzeugs zur Verfügung gestellt. Das Hybridfahrzeug weist hierbei einen Elektromotor auf zur Bewegung des Hybridfahrzeugs sowie eine Batterie, wobei die Batterie verbunden ist mit dem Elektromotor und den Elektromotor mit Strom versorgt. Weiterhin weist das Hybridfahrzeug eine Generatoreinheit auf, wobei die Generatoreinheit einen Verbrennungsmotor und einen mit dem Verbrennungsmotor verbundenen Generator aufweist, wobei der Generator die Bewegungsenergie des Verbrennungsmotors in Strom umwandelt zum Betrieb des Elektromotors oder zur Speicherung in der Batterie. Insbesondere ist das Hybridfahrzeug ausgebildet gemäß der vorstehenden Beschreibung. Hierbei weist das Verfahren die folgenden Schritte auf:
- Erfassen einer von dem Hybridfahrzeug zurückgelegten Strecke und
- Steuerung der Generatoreinheit in Abhängigkeit der erfassten Strecke.

Vorzugsweise umfasst die zurückgelegte Strecke die mit der aktivierten Generatoreinheit zurückgelegte Strecke. Insbesondere wird eine Aktivierung der Generatoreinheit verhindert, wenn die zurückgelegte Strecke für einen vorgegebenen Zeitraum einen vorgegebenen Grenzwert überschreitet. Hierbei kann es sich bei dem vorgegebenen Zeitraum um einen Tag, eine Woche, einen Monat oder ein Jahr handeln. Insbesondere umfasst die hierbei berücksichtigte zurückgelegte Strecke die von dem Hybridfahrzeug mit aktivierter Generatoreinheit zurückgelegter Strecke, sodass die mit aktivierter Generatoreinheit zurückgelegte Strecke begrenzt sein kann und ein Betrieb des Hybridfahrzeugs im Sinne eines konventionellen Verbrennerfahrzeugs gerade verhindert wird.

Vorzugsweise erfolgt die Erfassung der erzeugten Emission über die zurückgelegte Strecke. Dies kann beispielsweise aus dem Brennstoffverbrauch der Generatoreinheit abgeleitet werden. Alternativ hierzu können auch Motorkenngrößen wie beispielsweise die Drehzahl des Verbrennungsmotors der Generatoreinheit herangezogen werden, da dieser üblicherweise mit einer im Wesentlichen gleichbleibenden Last betrieben wird. Somit kann eine Steuerung der Generatoreinheit erfolgen in Abhängigkeit von der erzeugten Emission über eine vom Hybridfahrzeug zurückgelegten Strecke. Überschreitet die Emission über die zurückgelegte Strecke beispielsweise einen vorgegebenen Grenzwert, so wird die Generatoreinheit abgeschaltet und eine weitere Aktivierung verhindert, bis der Grenzwert wieder unterschritten ist, insbesondere durch Zurücklegen einer Strecke ausschließlich mit elektrischer Energie aus der Batterie bzw. Betrieb des Hybridfahrzeugs als Elektrofahrzeug.

Vorzugsweise ist das Verfahren weitergebildet anhand der Merkmale des vorstehend beschriebenen Hybridfahrzeugs.

In einem weiteren Aspekt der vorliegenden Erfindung wird ein Verfahren zum Betrieb einer Flotte von Fahrzeugen bereitgestellt. Hierbei weist die Flotte mindestens ein Hybridfahrzeug auf, welches ausgebildet ist wie vorstehend beschrieben. Insbesondere kann die Flotte unterschiedliche Fahrzeuge umfassen, also konventionelle Verbrennerfahrzeuge, reine Elektrofahrzeuge oder andere emissionsfreie Fahrzeuge wie beispielsweise Wasserstofffahrzeuge. Insbesondere können die Fahrzeuge alle identisch ausgebildet sein. Alternativ hierzu unterscheiden sich mindestens zwei Fahrzeuge in ihrer Ausgestaltung. Vorzugsweise handelt es sich bei allen Fahrzeugen um Hybridfahrzeuge. Insbesondere umfasst die Flotte von Hybridfahrzeugen ausschließlich serielle Hybridfahrzeuge wie vorstehend beschrieben. Besonders bevorzugt weist die Flotte ausschließlich Hybridfahrzeuge auf, die ausgebildet sind wie vorstehend beschrieben.

Vorzugsweise wird mindestens eines der Hybridfahrzeuge der Flotte, mehrere oder alle Hybridfahrzeuge der Flotte in Abhängigkeit der von den Fahrzeugen der Flotte akkumuliert zurückgelegten Strecke gesteuert. Somit wird gemäß dem Verfahren die durch die Fahrzeuge der Flotte gemeinsam zurückgelegte Strecke berücksichtigt zur Steuerung der einzelnen Hybridfahrzeuge. Überschreitet hierbei beispielsweise die durch die Fahrzeuge der Flotte zurückgelegte Strecke einen vorgegebenen gemeinsamen Grenzwert, so wird beispielsweise die Generatoreinheit eines der Hybridfahrzeuge der Flotte, mehrerer oder aller Hybridfahrzeuge der Flotte abgeschaltet bzw. eine Aktivierung der entsprechenden Generatoreinheiten gerade verhindert. Somit wird sichergestellt, dass eine akkumulierte Emission über die gesamte Flotte einen vorgegebenen Grenzwert nicht überschreitet. Insbesondere ist es möglich, dass bei Nutzung eines oder mehrerer der Hybridfahrzeuge der Flotte im Sinne eines Elektroautos bzw. durch die emissionsfreien Fahrzeuge der Flotte die hierdurch reduzierte Emission bzw. ohne Generatoreinheit zurückgelegte Strecke dieser Fahrzeuge genutzt werden kann von anderen Hybridfahrzeugen der Flotte, sodass eine Erhöhung der Reichweite dieser Hybridfahrzeuge durch Nutzung der Generatoreinheit ermöglicht wird. Es findet somit eine Bilanzierung der zurückgelegten Strecken bzw. erzeugten Emission über die gesamte Flotte statt, sodass einzelne Fahrzeuge, welche eine erhöhte Emission erzeugen, kompensiert werden können durch Fahrzeuge der Flotte, die unterhalb des Emissionsgrenzwertes liegen. Weiterhin ist das Verfahren zum Betrieb der Flotte von Fahrzeugen weitergebildet anhand der Merkmale des Hybridfahrzeugs wie vorstehend beschrieben und/oder gemäß dem Verfahren wie vorstehend beschrieben.

Nachfolgend wird die Erfindung anhand bevorzugter Ausführungsformen unter Bezugnahme auf die beigefügten Figuren näher erläutert.

Es zeigen:
- Fig. 1: eine schematische Darstellung eines Hybridfahrzeugs gemäß der vorliegenden Erfindung,
- Fig. 2: ein schematisches Ablaufverfahren zum Betrieb eines Hybridfahrzeugs gemäß der Fig. 1,
- Fig. 3: eine Detaildarstellung zur Steuerung des Hybridfahrzeugs gemäß der vorliegenden Erfindung und
- Fig. 4A - 4C: Ausführungsformen des Hybridfahrzeugs gemäß der vorliegenden Erfindung in einer Detaildarstellung.

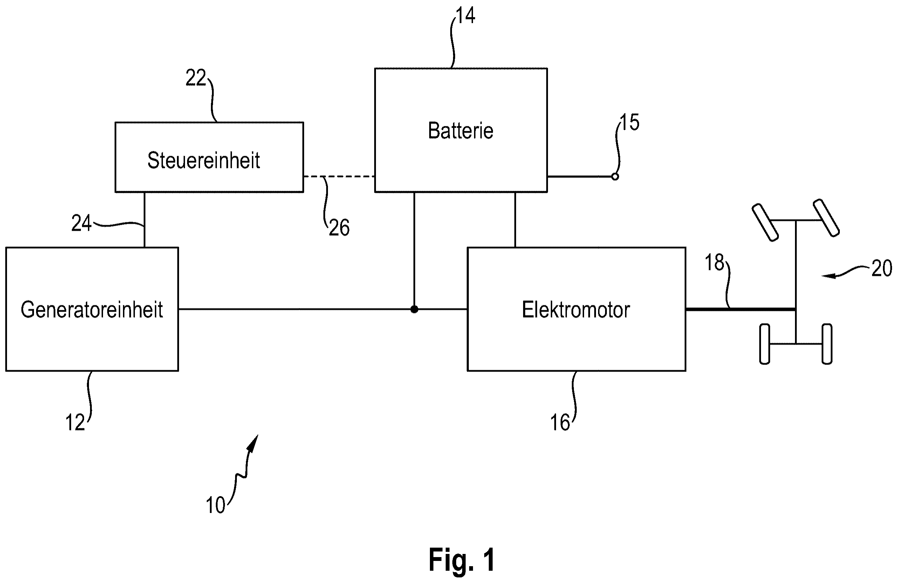

Im Folgenden wird Bezug genommen auf die Fig. 1. Das Hybridfahrzeug 10 weist einen Antriebsstrang 20 mit Antriebsrädern auf. Der Antriebsstrang 20 wird über eine mechanische Verbindung 18 von einem Elektromotor 16 angetrieben. Der Elektromotor 16 ist hierbei mit einer Batterie 14 verbunden, wobei die Batterie 14 Strom für den Elektromotor 16 zur Verfügung stellt zum Betrieb des Elektromotors 16 und zum Antrieb des Antriebsstrangs 20 des Hybridfahrzeugs 10. Weiterhin weist erfindungsgemäß das Hybridfahrzeug 10 eine Generatoreinheit 12 auf. Die Generatoreinheit 12 weist hierbei einen Verbrennungsmotor sowie einen Generator auf, wobei durch den Generator die Bewegungsenergie, welche durch den Verbrennungsmotor erzeugt wird, in elektrische Energie umgewandelt wird. Mittels der elektrischen Energie, welche von der Generatoreinheit 12 erzeugt wird, kann der Elektromotor 16 betrieben werden. Alternativ hierzu wird der von der Generatoreinheit 12 erzeugte Strom in der Batterie 14 gespeichert. Hierbei handelt es sich um einen seriellen Aufbau eines Hybridfahrzeugs. Insbesondere dient die Generatoreinheit 12 als "range extender", welche die begrenze Reichweite der Batterie 14 durch Verwendung eines Verbrennungsmotors erweitern soll. Hierbei besteht keine mechanische Verbindung zwischen der Generatoreinheit 12 und dem Antriebsstrang 20. Die Bewegungsenergie des Verbrennungsmotors der Generatoreinheit 12 wird somit nicht unmittelbar in eine Bewegung der Antriebsräder des Antriebsstrangs 20 umgewandelt, sondern es erfolgt eine mittelbare Nutzung des erzeugten Stroms durch den Elektromotor 16 entweder durch eine unmittelbare Übertragung von der Generatoreinheit 12 zu dem Elektromotor 16 oder eine mittelbare Übertragung, wobei bei der mittelbaren Übertragung die von der Generatoreinheit 12 erzeugte elektrische Energie in der Batterie 14 gespeichert wird und sodann bei Bedarf an den Elektromotor 16 weitergegeben wird.

Erfindungsgemäß weist das Hybridfahrzeug 10 eine Steuereinheit 22 auf. Die Steuereinheit ist dabei mit der Generatoreinheit 12 über eine Verbindung 24 verbunden. Zusätzlich hierzu kann die Steuereinheit 22 mit einer zweiten Verbindung 26 mit der Batterie 14 verbunden sein, was durch die gestrichelte Linie der Verbindung 26 angedeutet ist, sodass die Steuereinheit einen Ladezustand der Batterie 14 erfassen kann. So kann beispielsweise die Steuereinheit 22 ausgebildet sein in Abhängigkeit des Ladezustands der Batterie bzw. des Ladelevels der Batterie 14, die Generatoreinheit 12 zu aktivieren, um ausreichend Strom für den Elektromotor 16 bereitzustellen. Weiterhin kann die Steuereinheit weitere Aufgaben innerhalb des Hybridfahrzeugs 10 übernehmen.

Somit kann die Batterie 14 entweder durch die Generatoreinheit 12 geladen oder der durch die Batterie 14 zur Verfügung gestellte Strom kann durch die Generatoreinheit 12 verstärkt oder ersetzt werden. Hierbei weist die Batterie 14 einen Ladeanschluss 15 auf, sodass die Batterie 14 auch durch die Verbindung des Ladeanschlusses 15 mit einem Stromnetz geladen werden kann. Somit kann das Hybridfahrzeug 10 der vorliegenden Erfindung als reines Elektroauto betrieben werden, welches seine Bewegung ausschließlich aus der Kombination der Batterie 14 und dem Elektromotor 16 erzeugt zum Antrieb des Antriebsstrangs 20, wobei die Batterie mittels des Ladeanschlusses 15 geladen wird. Weiterhin ist es möglich, das Hybridfahrzeug auch über die Generatoreinheit 12 zu betreiben, wobei der Verbrennungsmotor der Generatoreinheit 12 aktiviert wird zur Erzeugung der elektrischen Energie, die vom Elektromotor 16 in eine Bewegung der Antriebsräder des Antriebsstrangs 20 umgewandelt wird. Somit ist auch ein Betrieb des Hybridfahrzeugs 10 als reines Verbrennungsfahrzeug möglich. Hierbei entstehen jedoch ungewollt hohe Emissionen und gleichzeitig wird der Vorteil des Hybridfahrzeugs 10 in einen Nachteil verkehrt, da zusätzliches Gewicht durch die Batterie 14 und den Elektromotor 16 anfallen und vom Verbrennungsmotor mitbewegt werden müssen.

Somit ist erfindungsgemäß die Steuereinheit 22 ausgebildet die Generatoreinheit 12 in Abhängigkeit von der von dem Hybridfahrzeug 10 zurückgelegten Strecke zu kontrollieren. Hierzu ist die Steuereinheit 22 ausgebildet, die von dem Hybridfahrzeug 10 zurückgelegte Strecke zu erfassen. Dies kann beispielsweise durch ein Odometer erfolgen, welches unmittelbar mit einem der Antriebsräder verbunden ist. Alternativ oder zusätzlich hierzu kann die zurückgelegte Strecke auch mittels eines Satellitennavigationssystems (GNSS), wie beispielsweise GPS, Galileo oder dergleichen, erfasst werden. Aus der so erfassten von dem Hybridfahrzeug 10 zurückgelegten Strecke kann sodann eine geeignete Steuerung der Generatoreinheit 12 abgeleitet werden. Hierbei wird durch die Steuereinheit 22 insbesondere die mit aktivierter Generatoreinheit 12 zurückgelegte Strecke bzw. die verursachten Emissionen erfasst. Durch die Berücksichtigung der zurückgelegten Strecke ist es möglich gerade einen ungewollten Betrieb des Hybridfahrzeugs als konventionelles Verbrennungsfahrzeug zu verhindern. Hierdurch kann die Emission des Hybridfahrzeugs 10 weiter reduziert werden und insbesondere können vorgegebene Emissionsgrenzwerte eingehalten werden.

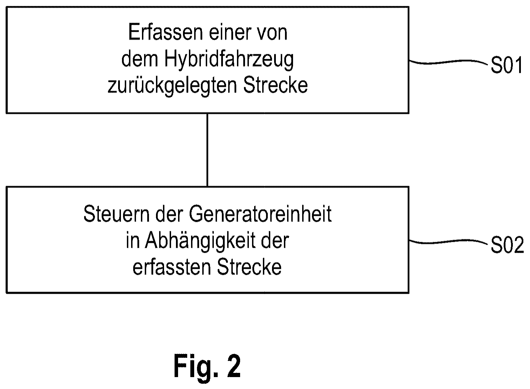

Fig. 2 zeigt ein schematisches Ablaufdiagramm für ein Hybridfahrzeug gemäß der Fig. 1 zur Reduktion der Emission eines solchen Hybridfahrzeugs. Das Verfahren weist die folgenden Schritte auf:
In Schritt S01 wird eine von dem Hybridfahrzeug zurückgelegten Strecke erfasst.
In Schritt S02 erfolgt ein Steuern der Generatoreinheit in Abhängigkeit der erfassten Strecke.

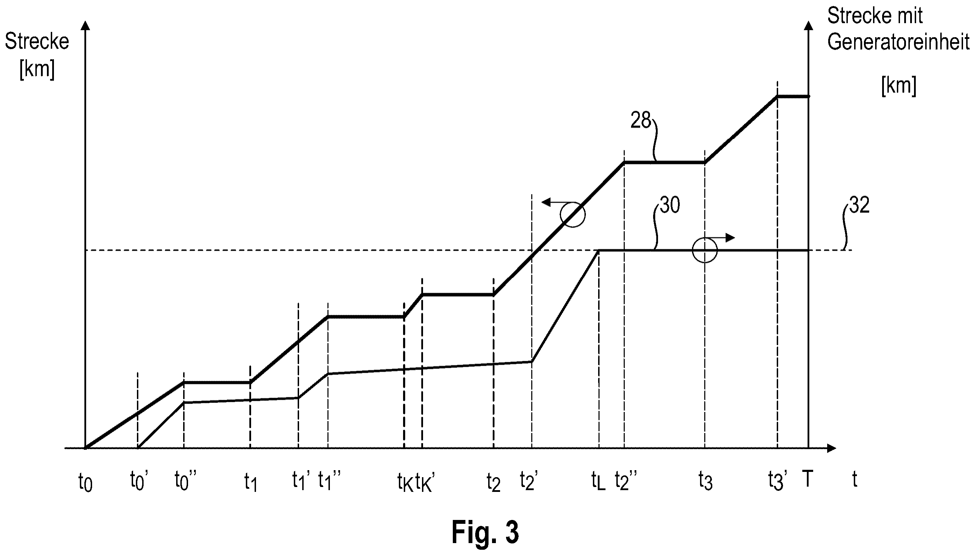

Nachfolgend wird Bezug genommen auf die Fig. 3, welche eine exemplarische Darstellung des Verfahrens wiedergibt. Hierbei ist mit der Linie 28 die durch das Hybridfahrzeug 10 zurückgelegte Strecke abgetragen über die Zeit t. Mit der Linie 30 ist die von dem Hybridfahrzeug mit aktivierte Generatoreinheit 12 zurückgelegte Strecke in denselben Einheiten dargestellt. Hierbei erstreckt sich die Zeit t über einen Zeitraum T. Mit dem Zeitraum T ist ein Bemessungszeitraum bezeichnet, innerhalb dem ein bestimmter Grenzwert 32 für eine mit aktivierter Generatoreinheit 12 gefahrene Strecke des Hybridfahrzeugs 10 nicht überschritten werden darf. Der vorgegebene Zeitraum T kann hierbei einem Tag, einer Woche, einem Monat oder einem Jahr oder einem anderen Zeitraum entsprechen.

Das Hybridfahrzeug wird in einem ersten Zeitraum von t₀ bis t₀" und in einem zweiten Zeitraum von t₁ bis t₁" bewegt. Die Generatoreinheit 12 ist hierbei in einem ersten Zeitraum von t₀' bis t₀" sowie in einem zweiten Zeitraum von t₁' bis t₁" aktiviert. Sowohl die gefahrenen Kilometer als auch die mit der aktivierten Generatoreinheit zurückgelegten Kilometer addieren sich. Zwischen diesen Bereichen befinden sich Zeitabschnitte, in denen das Fahrzeug nicht bewegt wird. Im Zeitraum zwischen tₖ und tₖ' wird durch das Hybridfahrzeug 10 eine Kurzstrecke gefahren, in der die Generatoreinheit 12 nicht aktiviert wird. In dem Bereich zwischen t₂ und t₂" wird erneut das Hybridfahrzeug gefahren und die Generatoreinheit 12 wird dabei zu einem Zeitpunkt t₂' aktiviert. Jedoch zum Zeitpunkt t_{L} erreicht die mit der aktivierten Generatoreinheit 12 zurückgelegte Strecke den Grenzwert 32 und die Generatoreinheit 12 wird ausgeschaltet bzw. eine weitere Aktivierung der Generatoreinheit 12 wird durch die Steuereinheit 22 gerade verhindert. In einem späteren Zeitraum zwischen t₃ und t₃' erfolgt somit keine erneute Aktivierung der Generatoreinheit 12. Somit werden in dem Zeitraum T beginnend ab dem Zeitpunkt t_{L}, bei dem die mit aktivierter Generatoreinheit 12 zurückgelegte Strecke des Hybridfahrzeugs den Grenzwert 32 erreicht, die Generatoreinheit 12 nicht mehr aktiviert und keine Emissionen mehr erzeugt, solange kein Ausgleich durch eine ausreichend lange emissionsfreie Strecke erfolgt. Alternativ zu einem Ausgleich wäre ebenfalls denkbar, dass durch Zahlung einer Abgabe oder einer entsprechenden Maut eine Erhöhung des Grenzwertes möglich ist. Nach Beendigung des Zeitraums T startet ein neuer Zeitraum, sodass die Generatoreinheit 12 wieder aktiviert werden kann bis sie erneut den Grenzwert 32 erreicht. Hierbei sind die aufeinanderfolgenden Zeiträume T insbesondere gleichbleibend. Wird in einem ersten Zeitraum T₁ der Grenzwert 32 nicht erreicht, kann der Grenzwert für einen nachfolgenden Zeitraum T₂ entsprechend angepasst werden. Insbesondere wird der Grenzwert des nachfolgenden Zeitraums T₂ gerade um die Strecken erhöht, um die die mit aktivierter Generatoreinheit 12 zurückgelegte Strecke innerhalb des ersten Zeitraums T₁ unterhalb des Grenzwerts 32 liegen. Somit erfolgt eine Bilanzierung über die einzelnen Zeiträume hinweg und eine kontinuierliche Begrenzung der Emission des Hybridfahrzeugs 10 wird erreicht.

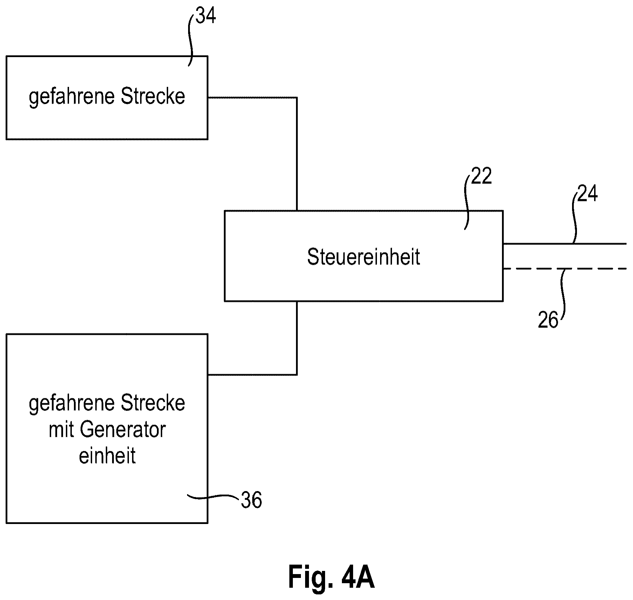

Es wird Bezug genommen auf die Fig. 4A. Hierbei ist die Steuereinheit 22 verbunden mit einem Modul 34 zur Erfassung der gefahrenen Strecke sowie mit einem Modul 36 zur Erfassung der gefahrenen Strecke mit aktivierter Generatoreinheit. Sofern der Absolutwert der gefahrenen Strecke mit aktivierter Generatoreinheit oder das Verhältnis zwischen gefahrener Strecke zu der mit aktivierter Generatoreinheit gefahrenen Strecke einen vorgegebenen Grenzwert überschreitet, ist die Steuereinheit ausgebildet, die Generatoreinheit 12 abzuschalten und eine weitere Aktivierung der Generatoreinheit 12 für den vorgegebenen Zeitraum zu verhindern.

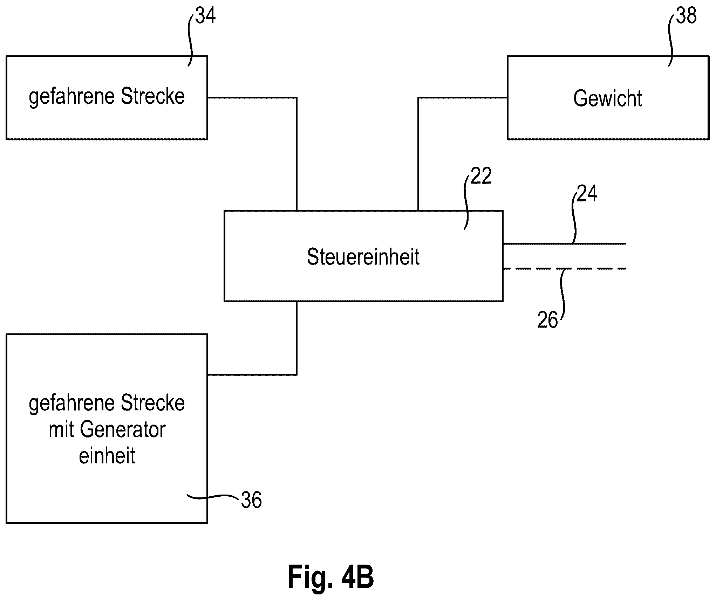

In der Ausführungsform der Fig. 4B wird zusätzlich noch das Gewicht über ein Gewichtserfassungsmodul 38 berücksichtigt. Hierbei kann das Gewicht beispielsweise erfasst werden über eine Luftfederung des Hybridfahrzeugs, wobei durch den an der Luftfederung anliegenden Druck auf das Gewicht des Hybridfahrzeugs 10 geschlossen werden kann. Da häufig Emissionsgrenzwerte in Abhängigkeit des Gewichts des Fahrzeugs angegeben sind (beispielsweise ausgestoßenes CO₂ in kg pro Gewicht in t und pro Gefahrene Strecke in km) kann das Gewicht bei der Anpassung des Grenzwerts 32 berücksichtigt werden. So kann beispielsweise erreicht werden, dass Leerfahren des Hybridfahrzeugs, welche üblicherweise ein geringes Gewicht aufweisen, einen höheren Anteil an rein elektrisch zurückgelegten Kilometern haben, wohingegen im vollbeladenen Zustand, auf Grund des höheren Gewichts, die Steuereinheit 22 ausgebildet ist, eine Aktivierung der Generatoreinheit 12 zuzulassen über eine längere Strecke.

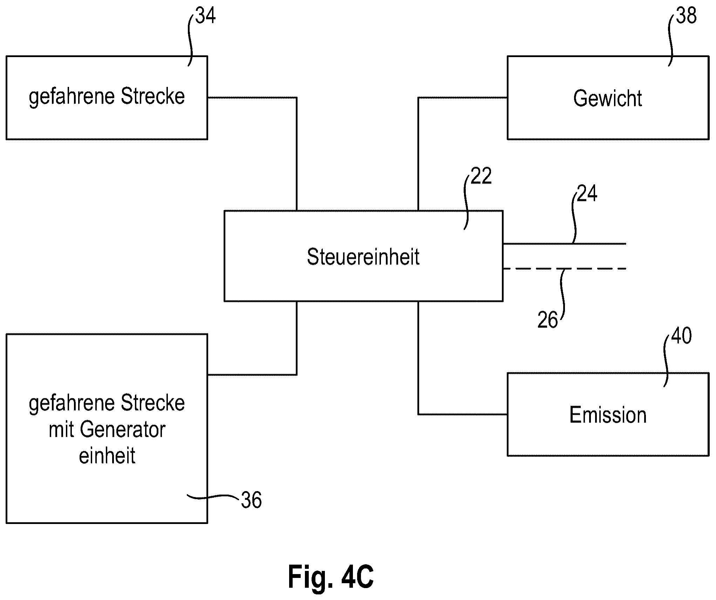

In Fig. 4C wird zusätzlich noch die tatsächliche von der Generatoreinheit 12 verursachte Emission 40 berücksichtigt. Somit kann die tatsächlich verursachte Emission berücksichtigt werden und ein Emissionsgrenzwert auch beispielsweise in Abhängigkeit von dem Gewicht 38 und/oder der gefahrenen Strecke 34 herangezogen werden, bei dessen Überschreiten die Steuereinheit 22 ausgebildet ist, die Generatoreinheit 12 abzuschalten bzw. eine erneute Aktivierung zu vermeiden.

Somit wird durch die vorliegende Erfindung ein Hybridfahrzeug geschaffen, welches weniger Emissionen verursacht, da das Hybridfahrzeug überwiegend als Elektrofahrzeug genutzt wird und die Generatoreinheit lediglich als Unterstützung im Sinne eines "range extenders" genutzt wird und gerade nicht die emissionsreduzierende Elektromobilität ersetzt.

## Patentansprüche

1. Hybridfahrzeug, insbesondere für den Transport von Stückgütern oder Sendungen, mit
einem Elektromotor zu Bewegung des Hybridfahrzeugs,
einer Batterie, wobei die Batterie verbunden ist mit dem Elektromotor und den Elektromotor mit Strom versorgt,
einer Generatoreinheit, wobei die Generatoreinheit einen Verbrennungsmotor und einen mit dem Verbrennungsmotor verbundenen Generator aufweist, wobei der Generator die Bewegungsenergie des Verbrennungsmotors in Strom umwandelt zum Betrieb des Elektromotors oder zur Speicherung in der Batterie,
einer Steuereinheit, wobei die Steuereinheit mit der Generatoreinheit verbunden ist und weiterhin ausgebildet ist die durch das Hybridfahrzeug zurückgelegte Strecke zu ermitteln,
wobei die Steuereinheit weiterhin ausgebildet ist die Generatoreinheit zu steuern in Abhängigkeit der von dem Hybridfahrzeug zurückgelegten Strecke.

2. Hybridfahrzeug nach Anspruch 1, **dadurch gekennzeichnet, dass** die Steuereinheit ausgebildet ist, die Generatoreinheit zu steuern in Abhängigkeit von der vom Hybridfahrzeug mit aktivierter Generatoreinheit zurückgelegten Strecke.

3. Hybridfahrzeug nach Anspruch 2, **dadurch gekennzeichnet, dass** die Steuereinheit ausgebildet ist, eine Aktivierung der Generatoreinheit zu verhindern, wenn die vom Hybridfahrzeug mit aktivierter Generatoreinheit zurückgelegte Strecke einen vorgegebenen Grenzwert überschreitet.

4. Hybridfahrzeug nach einem der Ansprüche 1 bis 3, **dadurch gekennzeichnet, dass** die Steuereinheit ausgebildet ist die Generatoreinheit zu steuern in Abhängigkeit der über die zurückgelegte Strecke erzeugten Emission des Hybridfahrzeugs.

5. Hybridfahrzeug nach Anspruch 4, **dadurch gekennzeichnet, dass** die Steuereinheit ausgebildet ist, eine Aktivierung der Generatoreinheit zu verhindern, wenn die vom Hybridfahrzeug erzeugte Emission über die zurückgelegte Strecke einen vorgegebenen Grenzwert überschreitet.

6. Hybridfahrzeug nach einem der Ansprüche 1 bis 5, **dadurch gekennzeichnet, dass** die Steuereinheit ausgebildet ist, die Generatoreinheit in Abhängigkeit der Strecke in einem vorgegebenen Zeitraum zu steuern.

7. Hybridfahrzeug nach Anspruch 6, **dadurch gekennzeichnet, dass** die Steuereinheit bei Unterschreiten eines vorgegebenen Grenzwerts der zurückgelegten Strecke der Grenzwert des nachfolgenden Zeitraums anpasst.

8. Verfahren zur Emissionsreduktion eines Hybridfahrzeugs mit
einem Elektromotor zu Bewegung des Hybridfahrzeugs,
einer Batterie, wobei die Batterie verbunden ist mit dem Elektromotor und den Elektromotor mit Strom versorgt,
einer Generatoreinheit, wobei die Generatoreinheit einen Verbrennungsmotor und einen mit dem Verbrennungsmotor verbundenen Generator aufweist, wobei der Generator die Bewegungsenergie des Verbrennungsmotors in Strom umwandelt zum Betrieb des Elektromotors oder zur Speicherung in der Batterie,
wobei das Verfahren die Schritte aufweist:
Erfassen einer von dem Hybridfahrzeug zurückgelegten Strecke und
Steuern der Generatoreinheit in Abhängigkeit der erfassten Strecke.

9. Verfahren nach Anspruch 8, bei dem die zurückgelegte Strecke die mit aktivierter Generatoreinheit zurückgelegte Strecke umfasst.

10. Verfahren nach Anspruch 9, bei dem eine Aktivierung der Generatoreinheit verhindert wird, wenn die zurückgelegte Strecke für einen vorgegebenen Zeitraum einen vorgegebenen Grenzwert überschreitet.

11. Verfahren zum Betrieb einer Flotte von Fahrzeugen, wobei die Flotte mindestens ein Hybridfahrzeug gemäß einem der Ansprüche 1 bis 7 umfasst.

12. Verfahren nach Anspruch 11, bei dem mindestens eines der Hybridfahrzeuge der Flotte gesteuert wird in Abhängigkeit der von den Fahrzeugen der Flotte akkumulierten zurückgelegten Strecke.
